(19) Europäisches Patentamt

European Patent Office

Office européen des brevets

(11) **EP 1 132 883 B1**

(12) **EUROPEAN PATENT SPECIFICATION**

(45) Date of publication and mention
of the grant of the patent:
**26.07.2006 Bulletin 2006/30**

(51) Int Cl.:
***G09G 3/32*** (2006.01)

(21) Application number: **01302039.1**

(22) Date of filing: **06.03.2001**

(54) **Apparatus and method for controlling gray level for display panel**

Verfahren und Einrichtung zur Graustufensteuerung von Anzeigetafeln

Méthode et dispositif de commande d'échelle de gris pour des dispositifs d'affichage

(84) Designated Contracting States:
**DE FR GB**

(30) Priority: **06.03.2000 KR 2000011057**

(43) Date of publication of application:
**12.09.2001 Bulletin 2001/37**

(73) Proprietor: **LG ELECTRONICS INC.**
**Seoul (KR)**

(72) Inventor: **Kim, Hak Su**
**Seoul (KR)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(56) References cited:
**EP-A- 0 942 407        EP-A- 1 030 285**
**WO-A-00/51103        WO-A-99/42983**
**US-A- 6 023 259**

EP 1 132 883 B1

**Description**

## BACKGROUND OF THE INVENTION

1. Field of the Invention

The present invention relates to an apparatus and method for controlling a gray level for a display panel.

2. Description of the Related Art

With recent tendency of large sized display devices, request of flat display panels occupied by a small space is increasing. As one example of the flat display panels, an organic EL display panel is receiving much attention. The organic EL display panel is very thin and can be fabricated in a matrix arrangement. Also, the organic EL display panel can be driven at a low voltage of 15V or less.

Recently, an active driving method is mainly used in the organic EL display panel. That is, in the active driving method, charges are stored in a capacitor using a low current and a driving transistor is driven using the charges of the capacitor.

In the active driving method, a gray level for a display panel is controlled by controlling the range of a driving current. However, since the range of the driving current is very small within several hundred pA to several tens of nA, it is difficult to control the gray level for the display panel by appropriately controlling the driving current.

Also, since the very small driving current is used, a charge storage capacitor requires a value of very small capacity. However, there is a limitation in reducing the size of the capacity of the charge storage capacitor due to leakage generated by a switching transistor of the organic EL display panel.

In other words, if leakage current generated by the switching transistor is great, the capacitor requires a greater capacity than the leakage amount to set a desired gray level in the display panel.

However, problems arise in that the pixel size of the display panel is limited and the size of the capacitor is also limited by the pixel size. To solve this problem, it is necessary to increase the pixel size or minimize the leakage current. However, it is general tendency that efforts for forming a small sized pixel are in progress, and there is still a limitation in reducing the leakage current.

WO99/42983 and US6023259 both describe an apparatus according to the preamble of claim 1.

Document EP-A-0942407 describes a method of reducing deterioration in a switching element over time.

## SUMMARY OF THE INVENTION

Accordingly, it would be desirable to provide an apparatus and method for controlling a gray level for a display panel, in which the gray level of the display panel is easily controlled based on an active driving circuit having a simple structure.

The invention provides an apparatus as defined in claim 1 of the accompanying claims.

In the preferred embodiment of the present invention, the pulse modulation part includes a control part for dividing the input data into bits of first and second groups, a pulse amplitude modulation part for pulse amplitude modulating the bits of the first group among the bits divided by the control part, and a pulse width modulation part for pulse width modulating the bits of the second group among the bits divided by the control part.

In the preferred embodiment of the present invention, a driving waveform is divided into a number of short pulses to control them and at the same time control a current within the respective pulses.

It is to be understood that both the foregoing general description and the following detailed description are exemplary and explanatory and are intended to provide further explanation of the invention as claimed.

## BRIEF DESCRIPTION OF THE DRAWINGS

By way of example only, there now follows a detailed description of an embodiment, with reference to the accompanying drawings, in which:

Fig. 1 is a block diagram showing an apparatus for controlling a gray panel for a display panel according to the present invention;

Fig. 2 is a detailed circuit showing an apparatus for controlling a gray panel for a display panel according to the present invention;

Fig. 3 is a block diagram showing a pulse modulation part according to the present invention;

Fig. 4 is a detailed block showing a driving waveform of a display panel according to the present invention; and

Fig. 5 is a timing chart showing driving waveforms of a display panel according to the present invention.

## DETAILED DESCRIPTION OF THE PREFERRED EMBODIMENTS

The following is a detailed description of a preferred embodiment of an active driving circuit for a display panel according to the present invention made with reference to the accompanying drawings.

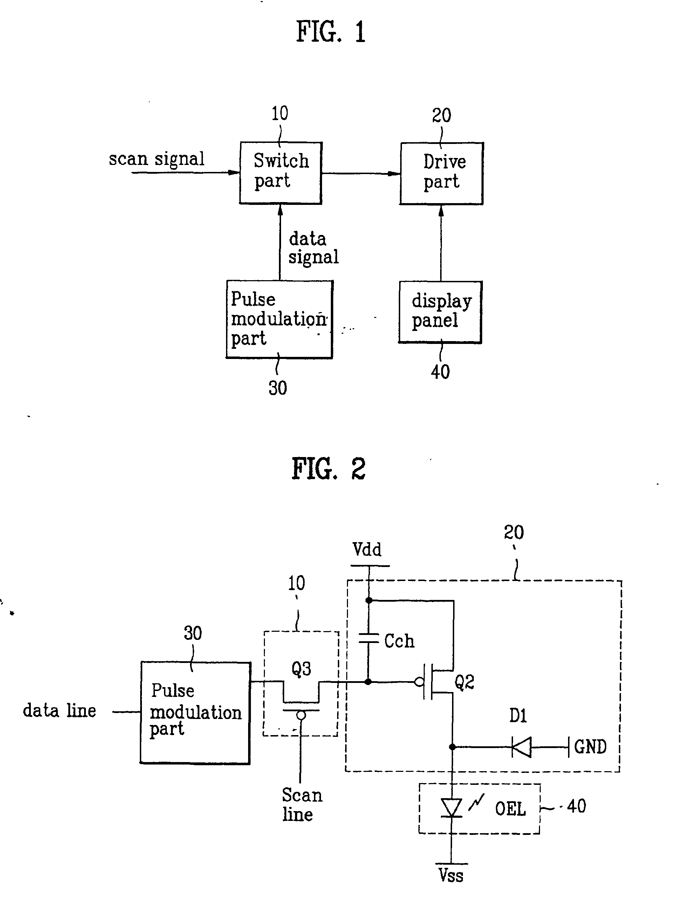

Fig. 1 is a block diagram showing an apparatus for controlling a gray panel for a display panel according to the present invention.

Referring to Fig. 1, the apparatus for controlling a gray level for a display panel driven according to the present invention includes a pulse modulation part 30 for pulse amplitude modulating some of bits of externally input data corresponding to the gray level for the display panel and pulse width modulating the other bits to apply them to data lines, a switch part 10 for switching the pulse modulated data of the data lines in accordance with scan line signals, and a drive part 20 for controlling the gray level for the display panel corresponding to the data applied from the switch part 10.

The aforementioned apparatus for controlling a gray level for a display panel will now be described in more detail with reference to Fig. 2.

Referring to Fig. 2, the drive part 20 includes a charge storage capacitor Cch connected with a positive power source Vdd, and a driving transistor Q2 for applying charges accumulated in the capacitor as much as a difference value between the data line signal and the positive power source Vdd to the display panel so as to drive the display panel. The switch part 10 includes a switching transistor Q3 for switching the data line signals using the scan line signals.

At this time, the positive power source Vdd is connected with a driving transistor Q2 and the charge storage capacitor Cch is connected between the positive power source Vdd and the driving transistor Q2.

The driving transistor Q3 is connected with the driving transistor Q2 and the pulse modulation part 30.

A diode D1 for protecting a voltage is additionally provided. The diode D1 is connected in parallel between the driving transistor Q2 and the display panel to prevent error operation and voltage breakdown of the driving transistor Q2 resulting from voltage drop of the driving transistor Q2.

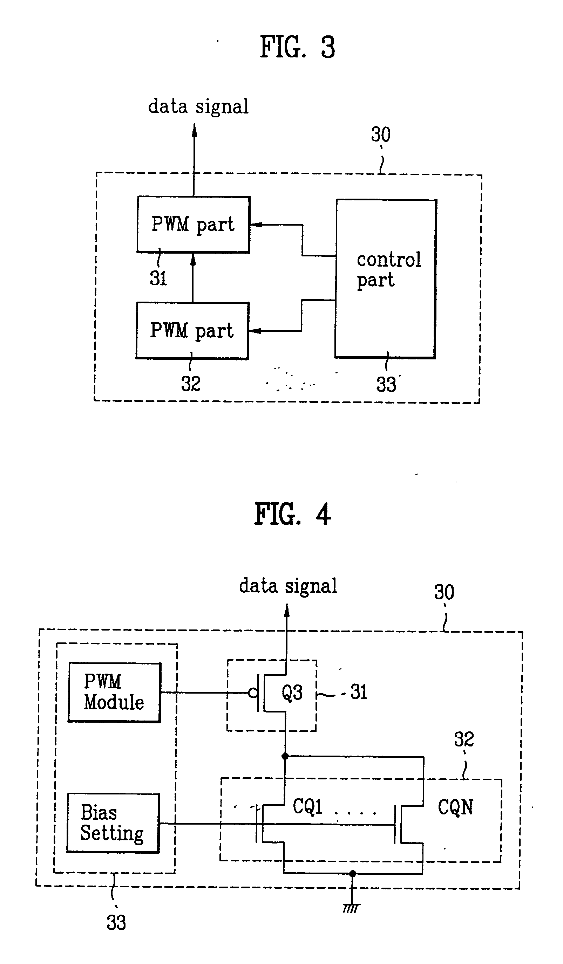

As shown in Figs. 3 and 4, the pulse modulation part 30 includes a control part 33 for dividing the input data into bits of first and second groups, a pulse amplitude modulation part 32 for pulse amplitude modulating the bits of the first group among the bits divided by the control part 33, and a pulse width modulation part 31 for pulse width modulating the bits of the second group among the bits divided by the control part 33.

The operation of the aforementioned apparatus for controlling a gray level for a display panel will be described below.

First, if a data value corresponding to the gray level for the display panel is externally input, the control part 33 divides the input data value into the bits of the first and second groups.

The input data value is divided into two groups depending on conditions of the panel or design conditions of the driving circuit.

For example, if the input data value is 8 bits, it is divided into four high bits and four low bits, or arbitrary bits are selected to be divided into two groups.

Subsequently, the bits of the first group among the divided bits are pulse amplitude modulated and then the bits of the second group are pulse width modulated. Alternatively, the bits of the first group are pulse width modulated and then the bits of the second group are pulse amplitude modulated.

CQ1 to CQN of the pulse amplitude modulation part 32 shown in Fig. 4 are generated as much as the number of bits used to control the amount of total current, and pulse amplitude modulate the bits selected by the control part.

Q3 of the pulse width modulation part 31 pulse width modulates a pulse of the respective bits except for the pulse amplitude modulated bits and maintains the pulse for a set time at high level.

As described above, the data pulse modulated by the pulse modulation part 30 are applied to the data lines, a voltage corresponding to the data is input to the charge storage capacitor Cch and the driving transistor Q2 through the switching transistor Q3.

Then, the gray level for the display panel is controlled in accordance with the pulse modulated data input through the capacitor Cch and the driving transistor Q2.

At this time, the switching transistor Q3 is controlled by the scan lines.

As described above, in each pixel, the gray level is controlled under the control of the data and scan lines, and each pixel having the controlled gray level displays one image.

At this time, the scan lines have a sinusoidal waveform equal to the pulse width modulated and applied to the data line.

Since the bits of the data are divided and then pulse amplitude modulated or pulse width modulated, the gray level for the display panel has a great width. This facilitates control of the gray level and thus can finely control the gray level.

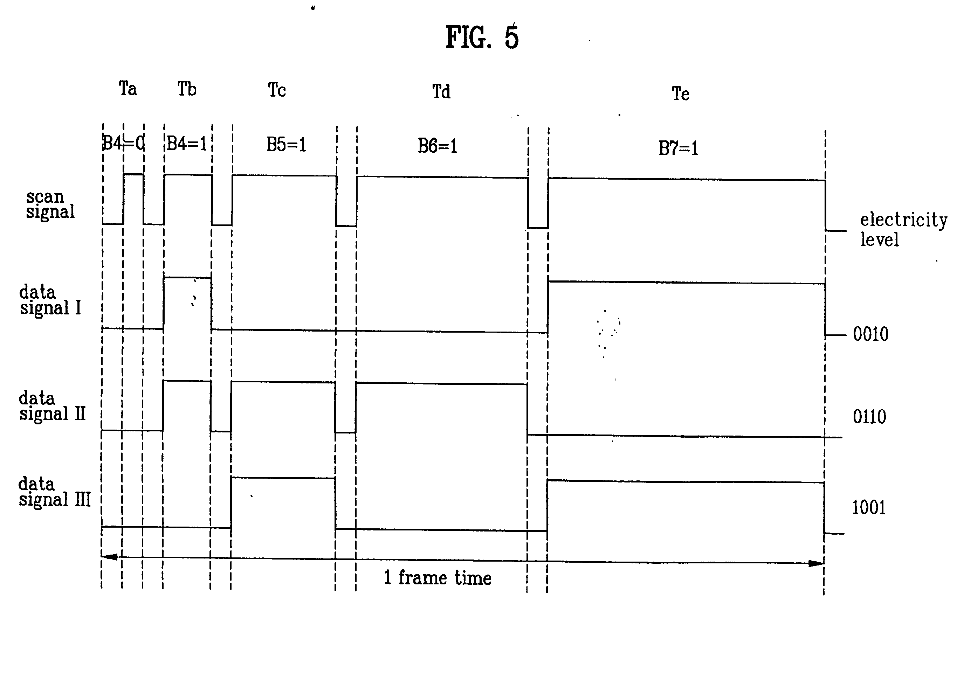

Fig. 5 is a timing chart showing a driving waveform for a display panel according to the present invention.

Supposing that the data bit applied to the display panel is 8 bits, 8 bits have been conventionally used to control the intensity of current. However, four low bits are only used to control the intensity of current in the present invention. The other four high bits vary the pulse width to control driving time.

While the data signal has been divided into four low bits and four high bits, the data signal may be divided into even bits and odd bits. The data signal may variously be divided depending on designs.

The data signal is divided into four levels as follows.

Data signal I : 1001 0010

Data signal II : 0111 0110

Data signal III : 1010 1001.

Supposing that the data signals I, II, and III are as above, Fig. 5 shows how respective waveforms are varied.

At this time, the four low bits show current level while the four high bits show pulses having different pulses at Te, Td, Tc, and Tb in sequence.

If the data pulse is not modulated after dividing the data, the following problems may occur. That is, it is assumed that the current level is 300pA when the data is "0000 0001" and the current level is 100nA when the data is "1111 1111." In this case, the gray level for the display panel shows 256 levels based on data of 8 bits. Since the minimum level that can be identified by a human body is about 300pA, the minimum current level is defined as about 300pA. Ine maximum current level for the maximum gray level is defined as about 100nA.

Therefore, if the data pulse is not modulated after dividing the data, the current level has a current range of about 389pA ((100nA-300pA)/256=389pA).

In other words, since the current range is small, it is difficult to control 256 gray levels within a small current range. Also, it is more difficult to control the gray levels if leakage current occurs.

However, in the present embodiment, if the data pulse is modulated after dividing the data, the current range becomes great, thereby facilitating control of the gray levels. That is, one frame time is divided at a proper ratio using four high bits among data of 8 bits. The intensity of the current is controlled using four low bits that show a current level.

In the present embodiment, since four bits are only used, the current level is 50nA when the data is "0001" while the current level is 100nA when the data is "1111".

As described above, supposing that the minimum gray level for the display panel requires the current of about 300pA when the data of 8 bits is used, the minimum gray level for the display panel requires the current of about 50nA and the maximum gray level requires the current of about 100nA when the data of 4 bits is used.

Thus, the current level has a current range of about 3nA (100nA-50nA)/16 = 3nA.

As described above, the current range is about 389pA when the data is 8 bits while the current range is five times equivalent to about 3nA when the data is 4 bits. Therefore, it is easy to control the current and a problem related to leakage current can be solved.

As shown in Fig. 5, the current range of four low bits that show a current level is 1μA, the intensity of the minimum current is 1μA, and the intensity of the maximum current is 15μm. Also, the range of the pulse widths of the four high bits is defined as 1, 2, 4, 8μs.

In case of the data signal I, since the intensity of the current is 2μA when four high bits 0010 and four high bits 1001 correspond to 9μs, 2μA is applied to the display panel for 9μs, thereby light-emitting the display panel.

In case of the data signal II, since the intensity of the current is 6μA when four low bits 0111 and four high bits 0110 correspond to 7μs, 6μA is applied to the display panel for 7μs, thereby light-emitting the display panel.

In case of the data signal III, since the intensity of the current is 9μA when four low bits 1001 and four high bits 1010 correspond to 10μs, 9μA is applied to the display panel for 10μs, thereby light-emitting the display panel.

Meanwhile, the switching time of the switching transistor Q3 becomes longer if the data pulse width applied through the data line is great.

Brightness of the display panel becomes high if applying time of the current to the display panel becomes long.

Accordingly, in the embodiment, brightness of the display panel can be controlled by controlling the size of the data pulse width even if the driving transistor Q2 or the storage capacitor Cch is used in the same manner as the related art.

The pulse width from Ta to Te shown in Fig. 5 can be obtained as follows.

Supposing that a frame T is 60μs and the distance between the respective pulse time is set at about 1μs, the pulse time is 55μs.

The size of the current controlled by the data line is in close relation with the pulse size.

In other words, brightness of the display panel when the maximum current occurs in Ta becomes darker than that when the minimum current occurs in Tb.

As described above, the intensity of the current and brightness according to the respective time can be obtained by the process for fabricating the display panel. The size of each time should be satisfied with the following conditions.

$$0 \mu s < Ta \leq Tb \leq Tc \leq Td \leq Te < T \ frame$$

As above, it is necessary to control the respective pulse width between the respective time of one frame in 0μs.

In the embodiment, the respective time is divided into four levels but can be divided into various levels depending on design conditions of a driving integrated circuit.

As described above, in the embodiment, the gray level for the display panel can easily be controlled by the pu_se modulation part 30 while the related art active driving circuit is used.

The described apparatus and method for controlling a gray level for a display panel has the following advantages.

The related art active driving circuit that can easily be designed is used and the data applied to the display panel is divided. Some of the data is pulse amplitude modulated to easily control the gray level for the display panel and the other data is pulse width modulated to easily control brightness of the display panel. Also, even if the leakage current is generated, no load of the capacitor size exists, thereby enabling free design.

The foregoing embodiments are merely exemplary and are not to be construed as limiting the present invention. The present teachings can be readily applied to other types of apparatuses. The description of the embodiments is intended to be illustrative, and not to limit the scope of the claims. Many alternatives, modifications, and variations will be apparent to those skilled in the art.

## Claims

1.   Apparatus for controlling a gray level for a display panel comprising a plurality of organic electroluminescent diodes, the organic electroluminescent diodes being driven by a plurality of scan line signals and a plurality of data line signals, comprising:

  a pulse modulation part (30) for pulse amplitude modulating the data line signal controlled by some of the bits of externally input data corresponding to the gray level for the display panel and for pulse width modulating the data line signal controlled by the other bits to apply them to the data lines;
  a switch part (10) for switching the pulse modulated data line signal of the data lines from its input to its output controlled by the scan line signal; and
  a drive part (20) for controlling the gray level for the display panel corresponding to the data line signal applied from the switch part to drive the display panel;

  wherein the drive part (20) comprises:

  a charge storage capacitor (Cch) connected with a power source part (Vdd) and said switch part (10), for storing a voltage corresponding to the difference between a voltage applied from the power source part (Vdd) and a voltage applied from the switch part (10); and
  a driving transistor (Q2) having a first signal terminal connected to the power source part (Vdd), a gate connected in operation to the charge storage capacitor (Cch) and said switch part (10), and a second signal terminal connected to an anode of an organic electroluminescent diode for driving the organic electroluminescent diode in accordance with the voltage across the charge storage capacitor (Cch);

  characterised in that the drive part (20) further comprises:
  a second diode (D1), the cathode of said second diode (D1) being connected to the second signal terminal of the driving transistor (Q2), and the anode being connected to a ground potential source (GND).

2.   Apparatus according to claim 1, wherein the pulse modulation part (30) comprises, a control part (33) for dividing the input data into bits of a first and a second group;
a pulse amplitude modulation part (32) for pulse amplitude modulating the data line signal controlled by the bits of the first group; and
a pulse width modulation part (31) for pulse width modulating the data line signal controlled by the bits of the second group.

3.   A display panel comprising the apparatus of any of claims 1 or 2.

## Patentansprüche

1.   Vorrichtung zur Steuerung des Graulevels des Panels eines Displays, die eine Mehrzahl von organischen Elektrolumineszenz-Dioden aufweist, wobei die organischen Elektrolumineszenz-Dioden durch eine Mehrzahl von Scanerleitungs-Signalen und einer Mehrzahl von Datenleitungs-Signalen betrieben werden, und die Vorrichtung ferner beinhaltet:

einen Pulsmodulationsteil (30) für die Pulsamplitudenmodulation des Scanerleitungs-Signals, das durch einige Bits von externen Eingangsdaten gesteuert ist, die dem Graulevel des Panels des Displays entsprechen, und für die Pulsweitenmodulation des Datenleitungs-Signals, das durch andere Bits gesteuert ist, um sie den Datenleitungen zuzuführen;

einen Schalterteil (10) für die Umschaltung des pulsmodulierten Datenleitungs-Signals der Datenleitungen von dessen Eingang zu dessen Ausgang, gesteuert durch das Scanerleitungs-Signal; und

einen Treiberteil (20) zur Steuerung des Graulevels des Panels eines Displays entsprechend dem Datenleitungs-Signal, das durch den Schalterteil dem Panel des Displays bereit gestellt ist;

wobei der Treiberteil (20) beinhaltet:

einen Ladung speichernden Kondensator (Cch), der an eine Spannungsversorgung (Vdd) und den Schalterteil (10) angeschlossen ist, und für die Speicherung eines Spannungswertes vorgesehen ist, der einer Differenz zwischen dem von der Spannungsversorgung (Vdd) bereitgestellten Spannungswert und dem durch den Schalterteil (10) bereitgestellten Spannungswert entspricht; und

einen treibenden Transistor (Q2), der einen ersten an die Spannungsversorgung (Vdd) angeschlossenen Signalanschluss aufweist, ein an den Ladung speichernden Kondensator (Cch) und den Schalterteil (10) angeschlossenes Gate und einen zweiten Signalanschluss, der an eine Anode einer organischen Elektrolumineszenz-Diode angeschlossen ist, um diese organische Elektrolumineszenz-Diode entsprechend dem Spannungswert aus dem Ladung speichernden Kondensator (Cch) zu betreiben; **dadurch gekennzeichnet, dass** der Treiberteil (20) ferner beinhaltet:

eine zweite Diode (D1), wobei die Katode dieser zweiten Diode (D1) an den zweiten Signalanschluss des treibenden Transistor (Q2) angeschlossen ist, und die Anode an das Grundpotential (GND) angeschlossen ist.

2. Vorrichtung nach Anspruch 1, deren Pulsmodulationsteil (30) enthält,

einen Steuerungsteil (33) für die Teilung der Eingangsdaten in Bits einer ersten und einer zweiten Gruppe;

einen Pulsamplitudenmodulationsteil (32) für die Pulsamplitudenmodulation des Datenleitungs-Signals, gesteuert durch die Bits der ersten Gruppe; und

einen Pulsweitenmodulationsteil (31) für die Pulsweitenmodulation des Datenleitungs-Signals, gesteuert durch die Bits der zweiten Gruppe.

3. Ein Panel eines Displays, das eine Vorrichtung nach einem der Ansprüche 1 oder 2 enthält.

**Revendications**

1. Appareil de commande d'échelle de gris pour un panneau d'affichage comprenant une pluralité de diodes électroluminescentes organiques, les diodes électroluminescentes organiques étant commandées par une pluralité de signaux de ligne de balayage et une pluralité de signaux de ligne de données, comprenant :

une partie de modulation d'impulsion (30) pour assurer la modulation de l'amplitude d'impulsion du signal de ligne de données commandée par certains des bits de données d'entrée extérieures correspondant à l'échelle de gris pour le panneau d'affichage et pour assurer la modulation de la largeur d'impulsion du signal de ligne de données commandée par les autres bits pour l'appliquer aux lignes de données ;

une partie de commutation (10) pour assurer la commutation du signal de ligne de données modulé en impulsion des lignes de données de son entrée à sa sortie commandée par le signal de ligne de balayage ; et

une partie de commande (20) pour commander l'échelle de gris pour le panneau d'affichage correspondant au signal de ligne de données appliqué par la partie de commutation pour commander le panneau d'affichage ;

dans lequel la partie de commande (20) comprend :

un condensateur de stockage de charge (Cch) connecté à une partie de source de puissance (Vdd) et à ladite partie de commutation (10), pour stocker une tension correspondant à la différence entre une tension appliquée à partir de la partie de source d'alimentation (Vdd) et une tension appliquée par la partie de commutation (10) ; et un transistor de commande (Q2) ayant une première borne de signal connecté à la partie de source d'alimentation (Vdd), une grille connectée en fonctionnement au condensateur de stockage de charge (Cch) et à ladite partie de commutation (10), et une seconde borne de signal connectée à une anode d'une diode électroluminescente pour exciter la diode électroluminescente organique selon la tension à travers le condensateur de stockage de charge (Cch) ;

**caractérisé en ce que** la partie de commande (20) comprend en outre :

une seconde diode (D1), la cathode de ladite seconde diode (D1) étant connectée à la seconde borne de signal du transistor de commande (Q2), et l'anode étant connectée à une source de potentiel de masse (GND).

2. Appareil selon la revendication 1, dans lequel la partie de modulation d'impulsion (30) comprend, une partie de commande (33) pour diviser les données d'entrée en bits d'un premier et d'un second groupe ;
une partie de modulation d'amplitude d'impulsion (32) pour moduler l'amplitude d'impulsion du signal de ligne de données commandée par les bits du premier groupe ; et
une partie de modulation de largeur d'impulsion (31) pour moduler l'amplitude d'impulsion du signal de ligne de données commandée par les bits du second groupe.

3. Panneau d'affichage comprenant le dispositif selon l'une quelconque des revendications 1 ou 2.

# FIG. 1

# FIG. 2

# FIG. 3

data signal

30

PWM part ← control part

31

PWM part ←

32            33

# FIG. 4

data signal          30

PWM Module —○| Q3 |— 31

Bias Setting

CQ1 . . . . CQN

32

33

# FIG. 5

EP 1 132 883 B1